(19) **Europäisches Patentamt / European Patent Office / Office européen des brevets**

(11) **EP 3 840 373 B1**

(12) **EUROPEAN PATENT SPECIFICATION**

(45) Date of publication and mention
of the grant of the patent:
**15.03.2023 Bulletin 2023/11**

(21) Application number: **20861989.0**

(22) Date of filing: **28.09.2020**

(51) International Patent Classification (IPC):
$H04N\ 13/31^{(2018.01)}$    $G02B\ 27/01^{(2006.01)}$
$G02B\ 30/32^{(2020.01)}$    $G09G\ 5/00^{(2006.01)}$
$G09G\ 5/36^{(2006.01)}$    $H04N\ 13/366^{(2018.01)}$
$H04N\ 13/398^{(2018.01)}$

(52) Cooperative Patent Classification (CPC):
**G02B 30/32; G02B 27/0172; H04N 13/31;
H04N 13/366; H04N 13/398;** G02B 2027/0134

(86) International application number:
**PCT/JP2020/036689**

(87) International publication number:
**WO 2021/065825 (08.04.2021 Gazette 2021/14)**

(54) **THREE-DIMENSIONAL DISPLAY DEVICE, THREE-DIMENSIONAL DISPLAY SYSTEM, HEAD-UP DISPLAY, AND MOBILE BODY**

DREIDIMENSIONALE ANZEIGEVORRICHTUNG, DREIDIMENSIONALES ANZEIGESYSTEM, HEADUP-ANZEIGESYSTEM UND MOBILER KÖRPER

DISPOSITIF D'AFFICHAGE TRIDIMENSIONNEL, SYSTÈME D'AFFICHAGE TRIDIMENSIONNEL, AFFICHAGE TÊTE HAUTE ET CORPS MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2019 JP 2019178949**

(43) Date of publication of application:
**23.06.2021 Bulletin 2021/25**

(73) Proprietor: **Kyocera Corporation
Kyoto-shi,
Kyoto 6128501 (JP)**

(72) Inventors:
• **SATOU, Akinori
Kyoto-shi
Kyoto
6128501 (JP)**

• **KUSAFUKA, Kaoru
Kyoto-shi
Kyoto
6128501 (JP)**

(74) Representative: **Viering, Jentschura & Partner
mbB
Patent- und Rechtsanwälte
Am Brauhaus 8
01099 Dresden (DE)**

(56) References cited:
EP-A1- 3 037 922    EP-A2- 2 418 862
WO-A1-2018/105533    WO-A1-2019/171557
JP-A- H02 301 798    JP-A- 2010 039 556
JP-A- 2012 080 439    JP-A- 2014 195 141
JP-A- 2015 008 394    JP-A- 2016 116 221
JP-A- 2019 082 671

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a three-dimensional display device, a three-dimensional display system, a head-up display, and a mobile object.

Background Art

In a related art, a three-dimensional display device acquires positional data indicating the positions of user's eyes detected by using images of user's eyes photographed by a camera. The three-dimensional display device causes a display unit to show images in a manner permitting viewing of an image for left eye by user's left eye, as well as viewing of an image for right eye by user's right eye, on the basis of eye positions indicated by the positional data (refer to Patent Literature 1, for instance).

Unfortunately, there is a time lag between the time of imaging user's eyes by the camera and the time of displaying images based on eye positions by the three-dimensional display device. In consequence, when the positions of user's eyes vary after that point in time when the camera imaged user's eyes, the resulting three-dimensional image displayed by the three-dimensional display device may not be comfortably viewed as a proper three-dimensional image by the user.

A three-dimensional display device according to the preamble of claim 1 is, e.g., known from EP 2 418 862 A2. WO 2018/105533 A1 discloses an image projection device. EP 3 037 922 A1 discloses an apparatus and method for predicting an eye position.

Citation List

Patent Literature

Patent Literature 1: Japanese Unexamined Patent Publication JP-A 2001-166259

Summary of Invention

The invention provides a three-dimensional display device according to claim 1, a three-dimensional display system according to claim 7, a head-up display according to claim 8, and a mobile object according to claim 9. Further embodiments are described in the dependent claims.

Brief Description of Drawings

Other and further objects, features, and advantages of the invention will be more explicit from the following detailed description taken with reference to the drawings wherein:

FIG. 1 is a diagram showing a schematic structure of the three-dimensional display system according to an embodiment of the disclosure;
FIG. 2 is a diagram illustrating an example of a display panel shown in FIG. 1, as viewed in a depth direction;
FIG. 3 is a diagram illustrating a parallax barrier shown in FIG. 1, as viewed in the depth direction;
FIG. 4 is a diagram illustrating the display panel and the parallax barrier shown in FIG. 1, as seen from the parallax barrier by a left eye of a user;
FIG. 5 is a diagram illustrating the display panel and the parallax barrier shown in FIG. 1, as seen from the parallax barrier by a right eye of the user;
FIG. 6 is an explanatory diagram illustrating an eye position-visible region relationship;
FIG. 7 is an explanatory diagram illustrating timewise relationships among imaging of eyes, acquisition of positional data, initiation of display control based on predicted eye positions, and image display on the display panel;
FIG. 8 is an explanatory flow chart illustrating processing operation to be performed by the detection device;
FIG. 9 is an explanatory flow chart showing one example of prediction-function generation processing to be executed by the three-dimensional display device;
FIG. 10 is an explanatory flow chart showing one example of image display processing to be executed by the three-dimensional display device;
FIG. 11 is an explanatory flow chart showing another example of prediction-function generation processing and image display processing to be executed by the three-dimensional display device;

FIG. 12 is a diagram illustrating an HUD installed with the three-dimensional display system shown in FIG. 1; and
FIG. 13 is a diagram illustrating a mobile object installed with the HUD shown in FIG. 12.

Description of Embodiments

An embodiment of the disclosure will now be described in detail with reference to the drawings. The drawings to be referred to in the following description are schematic representations. Thus, dimensional ratios and so forth shown in the drawings may not completely coincide with actualities.

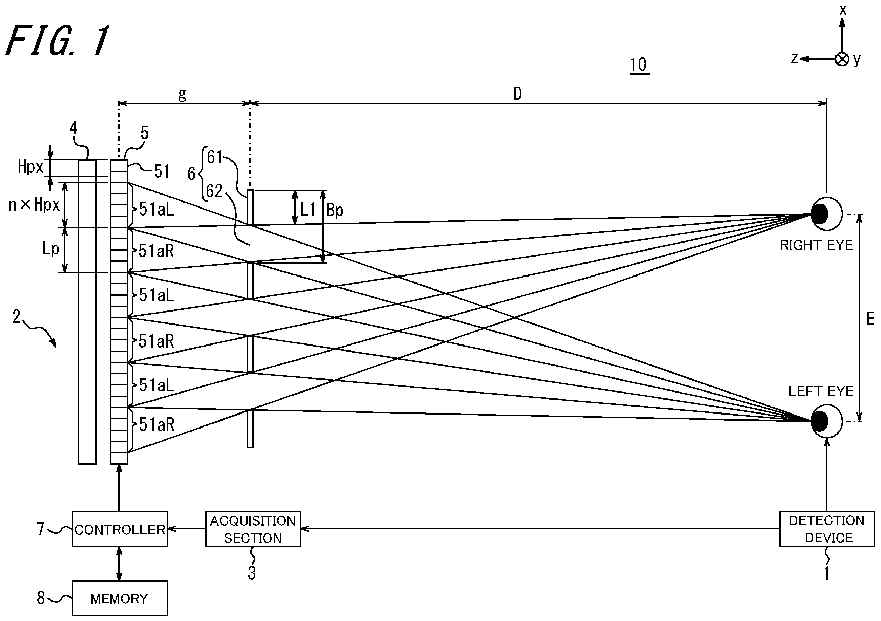

As shown in FIG. 1, a three-dimensional display system 10 according to an embodiment of the present disclosure includes a detection device 1 and a three-dimensional display device 2.

The detection device 1 may be configured to acquire images photographed by a camera configured to take an image of a space where user's eyes are expected to exist at regular time intervals (at 20 fps (frames per second), for instance). The detection device 1 is configured to detect the images of user's left eye (first eye) and right eye (second eye) one after another from the photographed images acquired from the camera. The detection device 1 is configured to detect the positions of the left eye and the right eye in the real space on the basis of the images of the left eye and the right eye in the photographed space. The detection device 1 may be configured to detect the positions of the left eye and the right eye represented in three-dimensional space coordinates from the images photographed by one camera. The detection device 1 may be configured to detect the positions of the left eye and the right eye represented in three-dimensional space coordinates from the images photographed by two or more cameras. The detection device 1 may be equipped with a camera. The detection device 1 is configured to successively transmit pieces of data on the positions of the left and right eyes in the real space to the three-dimensional display device 2.

The three-dimensional display device 2 includes an acquisition section 3, an irradiator 4, a display panel 5, a parallax barrier 6 provided as an optical element, a memory 7, and a controller 8.

The acquisition section 3 is configured to acquire pieces of data on eye positions successively transmitted from the detection device 1.

The irradiator 4 may be configured to planarly irradiate the display panel 5. The irradiator 4 may include a light source, a light guide plate, a diffuser plate, a diffuser sheet, etc. The irradiator 4 is configured to homogenize irradiation light emitted from the light source in a planar direction of the display panel 5 via the light guide plate, the diffuser plate, the diffuser sheet, etc. The irradiator 4 may be configured to emit the homogenized light toward the display panel 5.

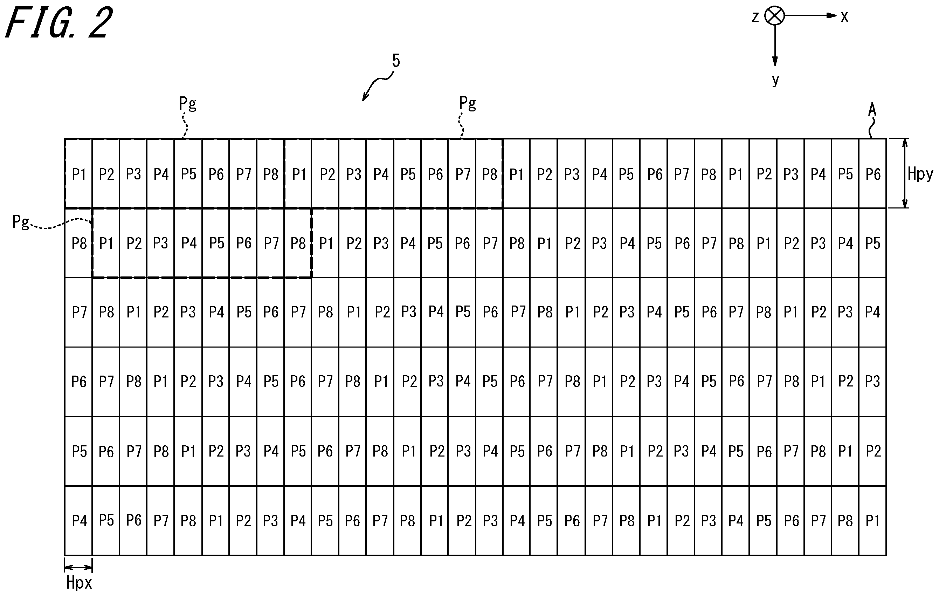

For example, a display panel such as a transmissive liquid-crystal display panel may be adopted for use as the display panel 5. As shown in FIG. 2, the display panel 5 includes a planar active area A with a plurality of segment regions thereon. The active area A is configured to display a parallax image. The parallax image include a left-eye image (first image) and a right-eye image (second image), which exhibits parallax with respect to the left-eye image. The plurality of segment regions are obtained by partitioning the active area A in a first direction and a direction perpendicular to the first direction within the surface of the active area A. For example, the first direction conforms to a horizontal direction. For example, the direction perpendicular to the first direction conforms to a vertical direction. A direction perpendicular to each of the horizontal direction and the vertical direction may be called "depth direction". In the drawings, the horizontal direction is designated as an x-axis direction; the vertical direction is designated as a y-axis direction; and the depth direction is designated as a z-axis direction.

The plurality of segment regions are each assigned a single subpixel P. That is, the active area A includes a matrix with horizontal and vertical rows of a plurality of subpixels P arranged in a grid pattern.

Each of the plurality of subpixels P may be associated with one of the following colors: R (Red); G (Green); and B (Blue). A set of three subpixels P corresponding to R, G, and B, respectively, can constitute one pixel. One pixel may be called "one picture element". The plurality of subpixels P constituting one pixel may be aligned in the horizontal direction. The plurality of subpixels P associated with one and the same color may be aligned in the vertical direction. The plurality of subpixels P may be given the same horizontal length Hpx. The plurality of subpixels P may be given the same vertical length Hpy.

The display panel 5 is not limited to a transmissive liquid-crystal panel, and may thus be of a display panel of other type such as an organic EL display panel. Examples of transmissive display panels include, in addition to liquid-crystal panels, MEMS (Micro Electro Mechanical Systems) shutter-based display panels. Examples of self-luminous display panels include organic EL (electro-luminescence) display panels and inorganic EL display panels. In the case where the display panel 5 is constructed of a self-luminous display panel, the irradiator 4 may be omitted from the three-dimensional display device 2.

The plurality of subpixels P consecutively arranged in the active area A as described above constitute one subpixel group Pg. For example, one subpixel group Pg includes a matrix of predetermined numbers of horizontally and vertically arranged subpixels. One subpixel group Pg includes ($2 \times n \times b$) subpixels P1 to P($2 \times n \times b$) consecutively arranged in the form of a b (vertical)- by n (horizontal)-subpixel matrix. The plurality of subpixels P constitute a plurality of subpixel groups Pg. The subpixel group Pg is repeatedly arranged in the horizontal direction to define a horizontal row of the plurality of subpixel groups Pg. In the vertical direction, the subpixel group Pg is repeatedly arranged to define a vertical row of the plurality of subpixel groups Pg such that each subpixel group is horizontally displaced with respect to its neighboring subpixel group by a distance corresponding to j subpixel(s) (j < n). This embodiment will be described assuming j of 1, n of 4, and b of 1 by way of example. In this embodiment, as shown in FIG. 2, the active area A includes the plurality of subpixel groups Pg each including 8 subpixels P1 to P8 consecutively arranged in the form of a 1 (vertical)-by 8 (horizontal)-subpixel matrix. P1 to P8 refer to information for identification of a plurality of subpixels. In FIG. 2, some subpixel groups are marked with a reference character Pg.

A plurality of mutually corresponding subpixels P of all the subpixel groups Pg display images of the same type, and perform displayed-image switching timewise in synchronism with one another. The displayed-image switching means switching between the left-eye image and the right-eye image. The plurality of subpixels P constituting one subpixel group Pg carry out image display while performing switching between the left-eye image and the right-eye image. For example, the plurality of subpixels P1 of, respectively, all the subpixel groups Pg perform displayed-image switching timewise in synchronism with one another. Likewise, a plurality of mutually corresponding subpixels P, bearing different identification information, of all the subpixel groups Pg perform displayed-image switching timewise in synchronism with one another.

The plurality of subpixels P constituting one subpixel group Pg display their respective images independently. The plurality of subpixels P constituting the subpixel group Pg effect image display while performing switching between the left-eye image and the right-eye image. For example, the plurality of subpixels P1 may perform switching between the left-eye image and the right-eye image timewise either in synchronism with or out of synchronism with the plurality of subpixels P2. Likewise, another two groups of the plurality of subpixels P bearing different identification information may perform switching between the left-eye image and the right-eye image timewise either in synchronism with or out of synchronism with each other.

The parallax barrier 6 is configured to define a direction of image light for a parallax image emitted from the display panel 5. As shown in FIG. 1, the parallax barrier 6 includes a surface set along the active area A. The parallax barrier 6 is spaced by a predetermined distance (gap) g away from the active area A. The parallax barrier 6 may be located on an opposite side of the irradiator 4 with respect to the display panel 5. The parallax barrier 6 may be located on an irradiator 4-side with respect to the display panel 5.

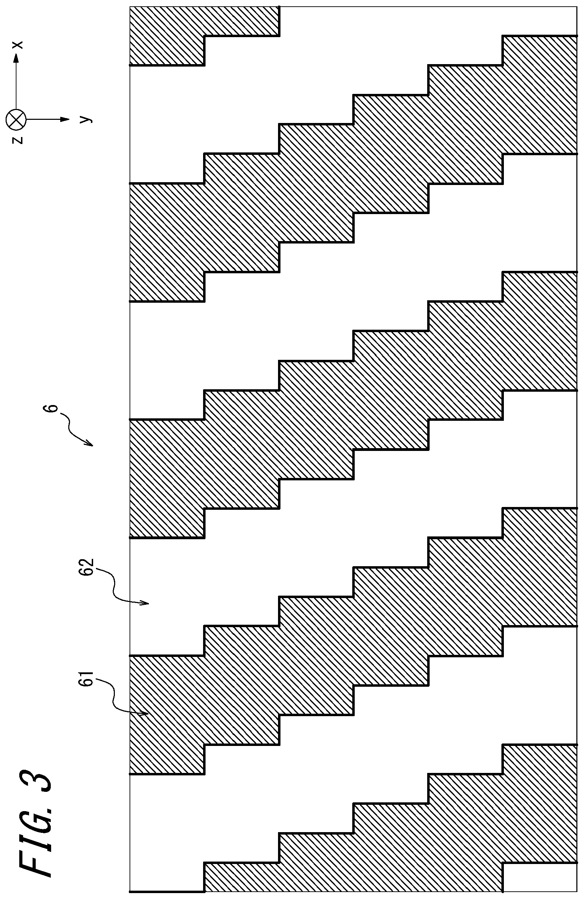

As shown in FIG. 3, the parallax barrier 6 includes a plurality of dimming portions 61 and a plurality of light-transmitting portions 62.

the plurality of dimming portions 61 are configured to reduce emitted image light. The term "dimming" is construed as encompassing light blockage. Each of the plurality of dimming portions 61 may have a transmittance which is less than a first value. Each of the plurality of dimming portions 61 may be formed of a film or a sheet member. The film may be made of resin or other material. The sheet member may be made of resin, or metal or the like, or also other material. The form of the plurality of dimming portions 61 is not limited to the film or sheet member, and the dimming portion 61 may thus be constructed of other different member. The base material used for the plurality of dimming portions 61 may exhibit dimming properties on its own, or may contain an adjunct having dimming properties.

The plurality of light-transmitting portions 62 each enable image light to pass therethrough at a transmittance which is greater than or equal to a second value which is greater than the first value. The plurality of light-transmitting portions 62 may be made in the form of an opening in the material of construction of the plurality of dimming portions 61. Each of the plurality of light-transmitting portions 62 may be formed of a film or sheet member having a transmittance which is greater than or equal to the second value. The film may be made of resin or other material. The plurality of light-transmitting portions 62 may be created with no use of any structural member. In this case, the plurality of light-transmitting portions 62 each have a transmittance of about 100%.

With the parallax barrier 6 comprising the plurality of dimming portions 61 and the plurality of light-transmitting portions 62, part of image light emitted from the active area A of the display panel 5 passes through the parallax barrier 6 so as to reach user's eyes, and part of the remainder of the image light is weakened by the parallax barrier 6 so as not to reach user's eyes. Thus, part of the active area A becomes easily visible to user's eyes, whereas the remainder of the area becomes less visible to user's eyes.

A length Lb of one light-transmitting portion 62 in the horizontal direction, a barrier pitch Bp, an optimal viewing distance D, a gap g, a length Lp of a desired visible region 5a in the horizontal direction, a length Hp of one subpixel P, the number of the subpixels P($2 \times n$) contained in the corresponding subpixel group Pg, and an inter-eye distance E may be determined so that the following expressions (1) and (2) hold. The optimal viewing distance D refers to a distance between each of user's eyes and the parallax barrier 6. The gap g refers to a distance between the parallax barrier 6 and the display panel 5. The visible region 5a refers to a region on the active area which is visible to each of user's eyes.

$$E : D = (2 \times n \times Hp) : g \qquad (1)$$

$$D: Lb = (D + g) : Lp \qquad (2)$$

The optimal viewing distance D refers to a distance between each of user's right and left eyes and the parallax barrier 6. The direction of a straight line passing through the right eye and the left eye (inter-eye direction) coincides with the horizontal direction. The inter-eye distance E is an average of the inter-eye distances E of users. For example, the inter-eye distance E may be set at values ranging from 61.1 mm (millimeter) to 64.4 mm obtained by calculation in the study by National Institute of Advanced Industrial Science and Technology. Hp represents the horizontal length of one subpixel.

A region of the active area A which is viewed by each of user's eyes is dependent on the position of each eye, the locations of the plurality of light-transmitting portions 62, and the optimal viewing distance D. In the following description, that region within the active area A which emits image light that travels to the position of user's eyes will be called "visible region 5a". That region within the active area A which emits image light that travels to the position of user's left eye will be called "left visible region 5aL" (first visible region). That region within the active area A which emits image light that travels to the position of user's right eye will be called "right visible region 5aR" (second visible region). That region within the active area A which emits image light that travels toward user's left eye while being weakened by the plurality of dimming portions 61 will be called "left dimming region 5bL". That region within the active area A which emits image light that travels toward user's right eye while being weakened by the plurality of dimming portions 61 will be called "right dimming region 5bR".

The memory 7 is configured to store various information processed by the controller 8. The memory 7 is constructed of a given memory device such as RAM (Random Access Memory) or ROM (Read Only Memory), for example.

The controller 8 is connected to each of the components constituting the three-dimensional display system 10. The controller 8 may be configured to control each of the constituent components. The constituent components that are controlled by the controller 8 include the display panel 5. For example, the controller 8 is built as a processor. The controller 8 may include one or more processors. Examples of the processor include a general-purpose processor for performing a specific function with corresponding loaded programs, and a special-purpose processor designed specifically for a specific processing operation. Examples of the special-purpose processor include a special-purpose IC (ASIC: Application Specific Integrated Circuit). Examples of the processor include a PLD (Programmable Logic Device). Examples of the PLD include a FPGA (Field-Programmable Gate Array). The controller 8 may be any one of SoC (System-on-a-Chip) and SiP (System In a Package) in which a single processor or a plurality of processors operate in cooperation. The controller 8 may be provided with a memory section for storing various information or programs for operation of the individual constituent components of the three-dimensional display system 10, etc. For example, the memory section may be constructed of a semiconductor memory device. The memory section may be made to serve as working memory for the controller 8.

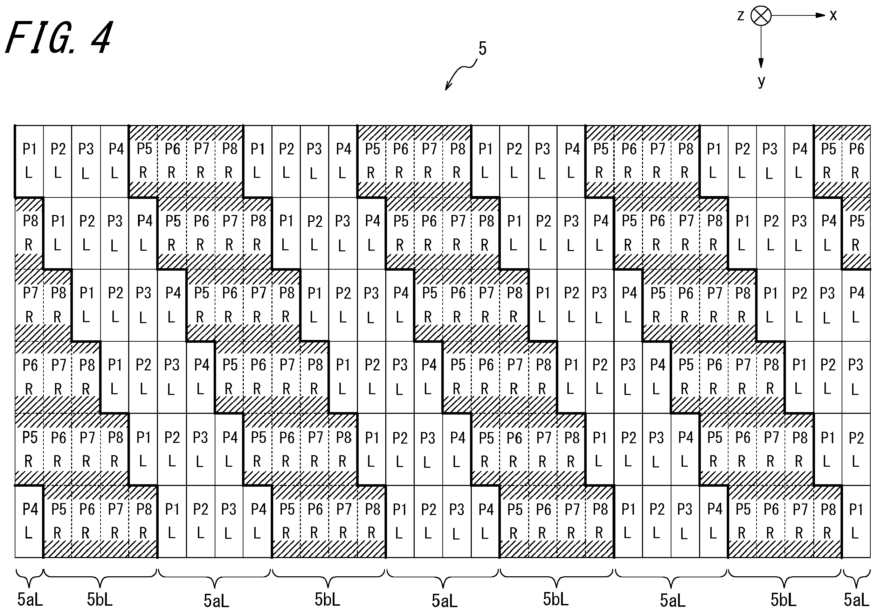

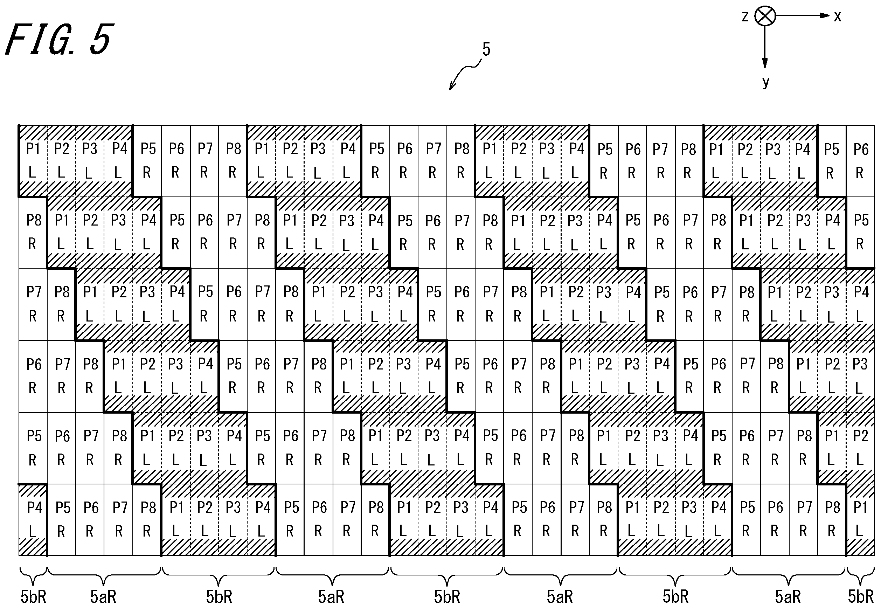

As shown in FIG. 4, the controller 8 is configured to cause the plurality of subpixels P contained in their respective left visible regions 5aL to display the left-eye image, and cause the plurality of subpixels P contained in their respective left dimming regions 5bL to display the right-eye image. Thus, while the left-eye image becomes easily visible to user's left eye, the right-eye image becomes less visible to the left eye. Moreover, as shown in FIG. 5, the controller 8 is configured to cause the plurality of subpixels P contained in their respective right visible regions 5aR to display the right-eye image, and cause the plurality of subpixels P contained in their respective right dimming regions 5bR to display the left-eye image. Thus, while the right-eye image becomes easily visible to user's right eye, the left-eye image becomes less visible to the right eye. This allows the user to view a three-dimensional image with his or her eyes. In FIGS. 4 and 5, the plurality of subpixels P that are caused to display the left-eye image by the controller 8 are each marked with a reference character "L", and the plurality of subpixels P that are caused to display the right-eye image by the controller 8 are each marked with a reference character "R".

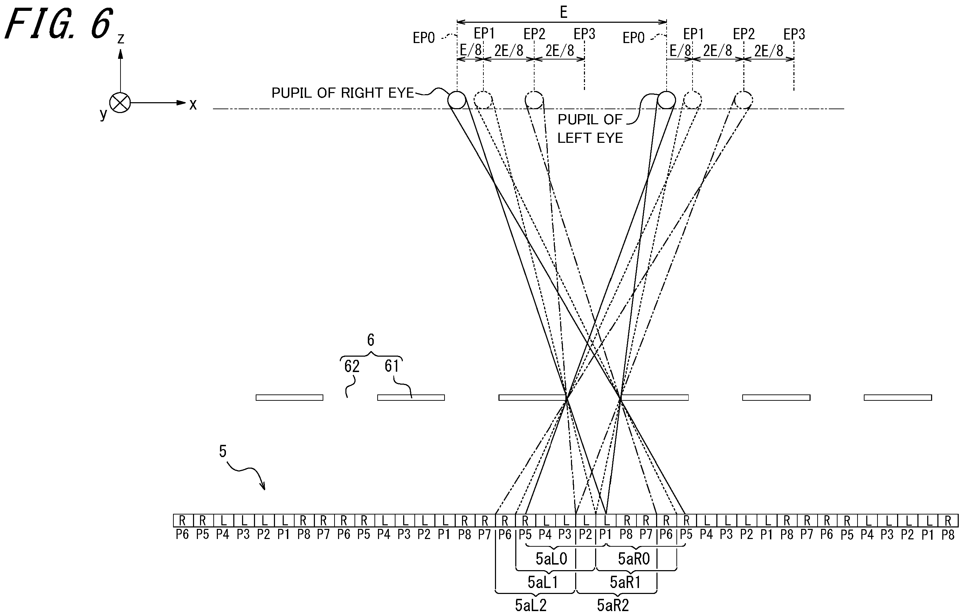

The left visible region 5aL is determined based on the position of the left eye. For example, as shown in FIG. 6, a left visible region 5aL when the left eye is located in a left displaced position EL1, differs from a left visible region 5aL0 when the left eye is located in a left reference position EL0. The left reference position EL0 refers to a position of the left eye which may be suitably determined as the reference. The left displaced position EL1 refers to a position of the left eye displaced from the left reference position EL0 in the horizontal direction.

The right visible region 5aR is determined based on the position of the right eye. For example, as shown in FIG. 6, a right visible region 5aR1 when the right eye is located in a right displaced position ER1, differs from a right visible region 5aR0 when the right eye is located in a right reference position ER0. The right reference position ER0 refers to a position of the right eye which may be suitably determined as the reference. The right displaced position ER1 refers to a position of the right eye displaced from the right reference position ER0 in the horizontal direction.

In the interest of user's comfortable viewing of a proper three-dimensional image, the controller 8 has to be able to cause the plurality of subpixels P contained in their respective left visible regions 5aL to display the left-eye image, as well as to cause the plurality of subpixels P contained in their respective right visible regions 5aR to display the right-eye image. It is desirable that the controller 8 be capable of exercising control in accordance with exact eye positions as of the time of image display.

The detection device 1 is configured to detect the images of user's eyes from the photographed images, and detect eye positions in the real space on the basis of the images of the eyes in the photographed space. The detection device 1 is configured to transmit positional data including eye positions in the real space to the three-dimensional display device 2. Certain periods of time are required for detection of eye positions with the detection device 1, for transmission of positional data from the detection device 1 to the three-dimensional display device 2, and for changing of displayed image made on the basis of received positional data to take effect. There is a lag between a time at which user's face was photographed by the detection device 1 and a display time at which an image based on the positions of the eyes of the face is displayed. This time lag involves a detection time period, a transmission time period, and a time period required for image changing to take effect, which will be referred to as an updating time period. The time lag is dependent on the performance capability of the detection device 1, the speed of communication between the detection device 1 and the three-dimensional display device, etc. When user's eyes move faster than a speed obtained by dividing a unit length of control for changing of displayed image in response to the movement of user's eyes by the time lag, then the user views an image irrelevant to the eye positions. For example, let the control unit length be 62.4 mm and the time lag be 65 ms, then, as user's eyes move at a speed of 0.24 mm/ms (0.24 millimeter per millisecond) or more, or equivalently at a speed of 24 cm/s (24 centimeter per second) or more, the user may feel a sense of discomfort about the displayed three-dimensional image.

The controller 8 performs the following processing operation to reduce the occurrence of such a trouble in viewing three-dimensional images. "Eye" as used in the following description may refer to left eye as well as right eye.

(Positional data-storage processing)

The controller 8 is configured to enable the memory 7 to store data which indicates eye positions (actually measured eye positions) acquired by the acquisition section 3, and the order in which pieces of the positional data were acquired. The memory 7 successively stores measured eye positions based on a plurality of photographed images captured at predetermined imaging time intervals, respectively. The order in which the eyes assumed the measured eye positions may also be stored in the memory 7. The predetermined imaging time interval refers to a time interval between captures of first and second images, which may be suitably determined with consideration given to the performance capability and design of the camera.

(Filtering processing)

The controller 8 may be configured to filter out positional data stored in the memory 7 using a low-pass filter, for example. The controller 8 may filter out data on eye positions with large variation per unit time. The controller 8 may extract effective positional data by filtering from data on eye positions detected with a low degree of accuracy. The controller 8 may, in calculation of prediction functions, increase the accuracy of the prediction functions by filtering. The controller 8 may carry out filtering in a manner to extract only data on eye positions with less variation over time, and more specifically only data on eye positions whose positional variation frequencies are lower than a predetermined value. The predetermined value refers to the experimentally or otherwise determined maximum value of a frequency of positional variation required to ensure desired accuracy.

(Prediction processing (Calculation of prediction functions))

The controller 8 is configured to output positions in the future as predicted eye positions by using a plurality of pieces of positional data stored in the memory 7. As used herein the future refers to a future time with respect to a plurality of pieces of positional data stored in the memory 7. The controller 8 may use a plurality of pieces of positional data that have undergone filtering using a low-pass filter. The controller 8 may be configured to output predicted eye positions by using a plurality of pieces of new positional data. The controller 8 may be configured to calculate prediction functions based on, out of positional data stored in the memory 7, for example, a plurality of pieces of recently stored positional data, and the display-updating time period. The controller 8 may be configured to determine how recently each data has been stored based on the time of imaging. The controller 8 may be configured to calculate prediction functions on the basis of actually measured eye positions, an acquisition time at which positional data was acquired by the acquisition section 3, and an experimentally or otherwise estimated updating time period.

A prediction function may be of a function derived by fitting calculation of a plurality of pairs of measured eye positions and a timing of imaging the measured eye positions. The time of imaging may be adopted as the imaging timing to derive the prediction function. The prediction function is used to output predicted eye positions as of a time equal to the current time plus the updating time period. More specifically, the controller 8 is designed so that, let a time equal to the acquisition time minus the updating time period be a time at which the eyes were in measured eye positions, on the basis of measured eye positions and the time at which the eyes were in the measured eye positions, a prediction function indicating the relationship between a time later than the current time and eye positions as of the time can be calculated. The prediction function may be of a function derived by fitting calculation of a plurality of measured eye positions arranged on an imaging-rate basis. The prediction function may be brought into correspondence with the current time in accordance with the updating time period.

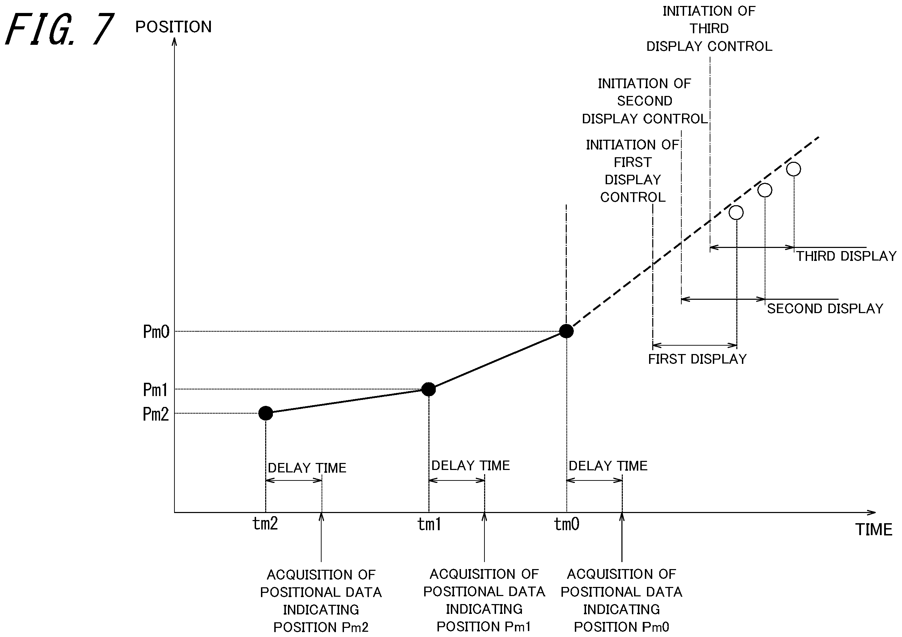

As exemplified in FIG. 7, the controller 8 is configured to calculate prediction functions on the basis of: the most recently measured eye position Pm0 and an eye-imaging time tm0 corresponding to the most recently measured eye position; the second most recently measured eye position Pm1 and an eye-imaging time tm1 corresponding to the second most recently measured eye position; and the third most recently measured eye position Pm2 and an eye-imaging time tm2 corresponding to the third most recently measured eye position. The most recently measured eye position Pm0 is the position indicated by data corresponding to the most recent imaging time. The second most recently measured eye position Pm1 is the position indicated by data corresponding to an imaging time one time before the most recent imaging time for the most recently measured eye position Pm0. The third most recently measured eye position Pm2 is the position indicated by data corresponding to an imaging time one time before the second most recent imaging time for the second most recently measured eye position Pm1.

The above-described filtering step may be omitted from the procedure to be followed by the controller 8. In this case, the controller 8 may be configured to likewise output predicted eye positions using a plurality of pieces of unfiltered positional data stored in the memory 7 through positional-data storage processing operation.

(Prediction processing (Output of predicted eye positions))

The controller 8 is configured to output, at predetermined output time intervals, predicted eye positions as of a time equal to the current time plus a predetermined time period based on the prediction functions. The predetermined time period corresponds to a display-processing time period estimated as a necessary time interval between the initiation of display control by the controller 8 and the completion of image display on the display panel 5. The predetermined output time interval may be shorter than the predetermined imaging time interval.

(Image display processing)

The controller 8 is configured to start control operation to cause each subpixel P to display an image in correspondence with the visible region 5a which is based on the most recently outputted predicted eye positions, at display time intervals determined so that the display panel 5 carries out image updates at predetermined frequencies. After a lapse of the display-processing time period since the initiation of each display control by the controller 8, predicted eye position-based images are displayed and updated on the display panel 5.

For example, a camera designed for photographing at 20 fps may be adopted for use in the detection device 1. This camera performs imaging at 50-ms time intervals. The controller 8 may be configured to output photographed images at output time intervals equal to the imaging time intervals. The controller 8 may be configured to output photographed images at output time intervals different from the imaging time intervals. The output time interval may be shorter than the imaging time interval. The output time interval may be set at 20 ms. In this case, the controller 8 outputs predicted eye positions once every 20 ms (at 50 sps (samples per second)). The controller 8 is capable of image display based on predicted eye positions outputted at time intervals shorter than the imaging time intervals. Thus, the three-dimensional display device 2 allows the user to view a three-dimensional image adapted to minutely varying eye positions.

The output time interval may be shorter than the display time interval during which the image displayed on the display panel 5 is updated. For example, in the case where the controller 8 acts to update the image displayed on the display panel 5 at 60 Hz (Hertz), expressed differently, in the case where the display time interval is set at about 16.7 ms, the output time interval may be set at 2 ms. In this case, the controller 8 output predicted eye positions once every 2 ms (namely, at 500 sps). The controller 8 is capable of image display based on the positions of the left and right eyes as of a time closer to the time of image display than the last image-display time. Thus, the three-dimensional display device 2 minimizes the difficulty of user's viewing of a proper three-dimensional image entailed by variation in eye positions.

(Evaluation processing)

The controller 8 evaluates prediction functions, and may modify the prediction functions in accordance with the results of evaluation. More specifically, the controller 8 may perform a comparison between the output of prediction function-based predicted eye positions and measured eye positions detected from the actually photographed images corresponding to the predicted eye positions. The controller 8 may bring the predicted eye positions into correspondence with the measured eye positions on the basis of the recorded time of imaging. The controller 8 may bring the predicted eye positions into correspondence with the measured eye positions on the basis of the imaging time interval. The controller 8 may modify the prediction functions in accordance with the results of comparison. The controller 8 may, in the subsequent prediction processing operation, output eye positions predicted by using the modified prediction functions, and cause the display panel 5 to display an image based on the predicted eye positions which are obtained by using the modified prediction functions.

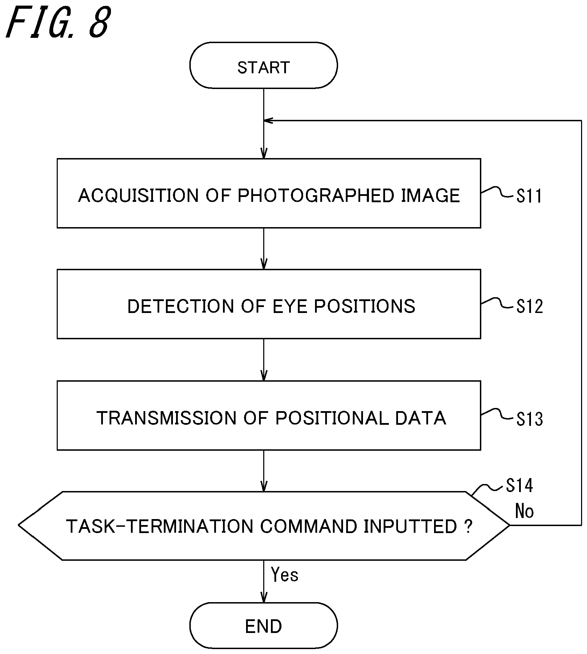

The following describes the operation of the three-dimensional display system 10 according to this embodiment with reference to flow charts shown in FIGS. 8 to 10. Referring first to the flow chart of FIG. 8, the operation of the detection device 1 of this embodiment will be described.

The detection device 1 acquires one particular image photographed by the camera (Step S11).

Upon acquiring the one photographed image in Step S11, the detection device 1 detects one particular eye position from the one photographed image acquired (Step S12) .

Upon detecting the one eye position in Step S12, the detection device 1 transmits positional data indicating the one eye position to the three-dimensional display device 2 (Step S13).

Upon transmitting the positional data in Step S13, the detection device 1 determines whether a task-termination command has been inputted (Step S14).

Upon determining that a task-termination command has been inputted in Step S14, the detection device 1 brings the procedure to an end. Upon determining that no task-termination command has been inputted, the detection device 1 returns the procedure to Step S11, and from then on repeats a sequence of Steps S11 to S13.

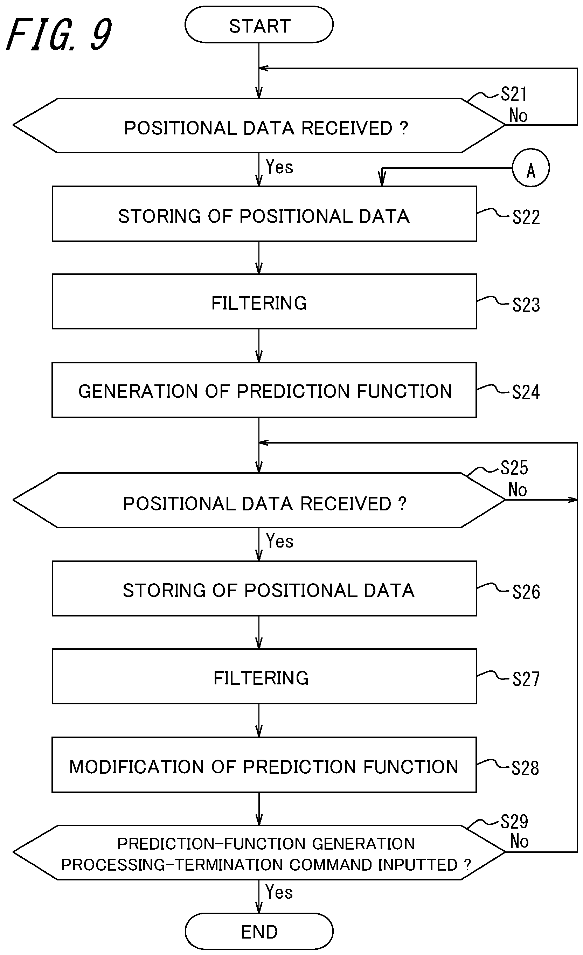

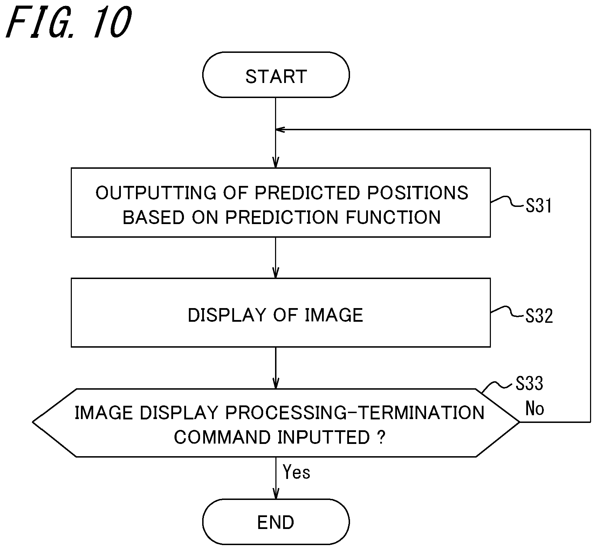

The following describes the operation of the three-dimensional display device 2 according to this embodiment with reference to flow charts shown in FIGS. 9 and 10. Referring first to the flow chart of FIG. 9, the operation of the three-dimensional display device 2 in prediction-function generation processing will be described.

The controller 8 of the three-dimensional display device 2 determines whether positional data has been received by the acquisition section 3 (Step S21).

Upon determining that no positional data has been received in Step S21, the controller 8 returns the procedure to Step S21. Upon determining that positional data has been received in Step S21, the controller 8 causes the memory 7 to store the positional data (Step S22) .

The controller 8 filters out the positional data stored in the memory 7 (Step S23).

The controller 8 generates prediction functions on the basis of the filtered positional data (Step S24).

The controller 8 determines whether positional data has been received by the acquisition section 3 once again (Step S25).

Upon determining that no positional data has been received in Step S25, the controller 8 returns the procedure to Step S25. Upon determining that positional data has been received in Step S25, the controller 8 causes the memory 7 to store the positional data (Step S26) .

The controller 8 filters out the positional data stored in the memory 7 (Step S27).

The controller 8 modifies the prediction functions using, out of measured eye positions indicated by the filtered positional data, measured eye positions indicated by data on eye positions imaged at a display time, i.e the time of image display, in display processing operation that will hereafter be described in detail (Step S28).

The controller 8 determines whether a command to terminate prediction-function generation processing has been inputted (Step S29).

Upon determining that a command to terminate prediction-function generation processing has been inputted in Step S29, the controller 8 brings the prediction-function generation processing to an end. Upon determining that no prediction-function generation processing-termination command has been inputted, the controller 8 returns the procedure to Step S21.

One of or both of Step S23 and Step S27 are optional in the procedure to be performed by the controller 8. The controller 8 may execute Step S27 on an optional basis throughout the process, from initiation to termination, to be performed repeatedly.

The following describes the operation of the three-dimensional display device 2 in image display processing with reference to the flow chart of FIG. 10.

The controller 8 outputs predicted eye positions based on prediction functions predicted or modified most recently in the described prediction-function generation processing operation, at the output time intervals (Step S31) .

The controller 8 changes the displayed image in accordance with the most recently outputted predicted eye positions at the display time intervals, and causes the display panel 5 to display the updated image (Step S32).

The controller 8 determines whether a command to terminate image display processing has been inputted (Step S33) .

Upon determining that an image display processing-termination command has been inputted in Step S33, the controller 8 brings the image display processing to an end. Upon determining that no image display processing-termination command has been inputted, the controller 8 returns the procedure to Step S31.

As thus far described, the three-dimensional display device 2 according to this embodiment outputs predicted eye positions as of a future display time later than the current time based on positional data stored in the memory 7, and causes each subpixel P of the display panel to display a parallax image based on the predicted eye positions. Thus, as contrasted to conventional display devices in which, on acquisition of eye positions detected from photographed images, control operation for image display is started on the basis of the acquired eye positions, the three-dimensional display device 2 achieves image display based on eye positions as of a time closer to the time of image display, and hence reduces the difficulty of user's viewing of a proper three-dimensional image even with variation in the positions of user's eyes.

The three-dimensional display device 2 according to this embodiment calculates a prediction function indicating the relationship between a future display time and eye positions based on positional data stored in the memory 7, and outputs predicted eye positions based on the prediction function. The three-dimensional display device 2 can output predicted eye positions without reference to the time of imaging by the camera.

The three-dimensional display device 2 according to this embodiment may output predicted eye positions based on the prediction function at output time intervals different from the imaging time intervals. The three-dimensional display device 2 can output predicted eye positions at output time intervals that are independent of the time intervals of imaging by the camera.

The three-dimensional display device 2 according to this embodiment may output predicted eye positions based on the prediction function at output time intervals shorter than the imaging time intervals. The three-dimensional display device 2 may provide a three-dimensional image adapted to eye positions varying at time intervals shorter than the imaging time intervals.

The three-dimensional display device 2 according to this embodiment modifies the prediction function depending on the results of comparison between predicted eye positions and measured eye positions. The three-dimensional display device 2 achieves proper output of predicted eye positions based on each of modified prediction functions. The three-dimensional display device 2 achieves image display based on proper predicted eye positions. The three-dimensional display device 2 reduces the difficulty of user's viewing of a proper three-dimensional image entailed by variation in eye positions.

For example, certain ambient light conditions or the presence of an obstacle on an optical path between user's eyes and the camera may hinder the detection device 1 from detecting eye positions. The acquisition section 3 may fail to acquire positional data in the event of unsuccessful eye-position detection by the detection device 1. In this regard, in the three-dimensional display device 2 according to this embodiment, even if the acquisition section 3 failed to acquire positional data, the following processing operation by the controller 8 makes it possible to reduce a decrease in prediction function accuracy. That is, in the three-dimensional display device 2, the controller 8 maintains the accuracy of prediction functions. This makes it possible to reduce the difficulty of user's viewing of a proper three-dimensional image.

(Prediction processing (Output of prediction position as of current time))

The controller 8 may be configured to, when the acquisition section 3 failed to acquire positional data, output predicted eye positions as of the current time using a plurality of pieces of positional data stored in the memory 7. The controller 8 may be configured to calculate a prediction function for prediction of eye positions as of the current time using a plurality of pieces of positional data stored in the memory 7. The prediction function for prediction of eye positions as of the current time may be referred to as the first prediction function. The controller 8 may be configured to output predicted eye positions as of the current time based on the first prediction function.

For calculation of the first prediction function, the controller 8 may use a plurality of pieces of positional data that have undergone filtering using a low-pass filter. The controller 8 may be configured to output predicted eye positions based on a plurality of pieces of new positional data. The controller 8 may be configured to calculate the first prediction function based on, out of positional data stored in the memory 7, for example, a plurality of pieces of recently stored positional data, and the display-updating time period. The controller 8 may be configured to determine how recently each data has been stored based on one or two or more of the following factors: the time of imaging, the order of data storage, and the consecutive number. By way of example, the memory 7 is configured to store only the positional data necessary for calculation of the first prediction function, and the controller 8 may be configured to calculate the first prediction function based on all the positional data stored in the memory 7. The controller 8 may be configured to calculate the first prediction function on the basis of actually measured eye positions, the time of acquisition at which positional data was acquired by the acquisition section 3, and an experimentally or otherwise estimated updating time period.

The controller 8 may be configured to, when the acquisition section 3 acquired positional data, perform a comparison between the acquired positional data and, out of a plurality of pieces of positional data stored in the memory 7, the most recently stored positional data. When these two pieces of positional data indicate the same value, the controller 8 may determine that the acquisition section 3 failed to acquire positional data. In other words, the controller 8 may be configured to, when the acquisition section 3 consecutively acquired same-value positional data pieces, determine that the acquisition section 3 failed to acquire positional data. As used herein same-value positional data pieces may refer to two pieces of positional data that are in perfect agreement with each other in respect of three coordinate values in three-dimensional space. The same-value positional data pieces may be two pieces of positional data such that the sum of differences among three coordinate values in three-dimensional space is less than a threshold value, or may be two pieces of positional data such that the maximum value of differences among three coordinate values in three-dimensional space is less than a threshold value. The threshold value may be experimentally or otherwise determined in advance.

The controller 8 may be configured to, when the acquisition section 3 consecutively acquired same-value positional data pieces, discard the second piece, namely that one of the consecutively acquired two positional data pieces which has been acquired more recently. The controller 8 may be configured to output predicted eye positions as of the current time based on a plurality of pieces of positional data including that one of the consecutively acquired two positional data pieces which has been acquired previously.

(Prediction processing (Output of prediction position as of future time))

The controller 8 is configured to output predicted eye positions as of a future time using a plurality of pieces of positional data including predicted eye positions as of the current time. As used herein the future time refers to a time later than the current time. The controller 8 may be configured to calculate a prediction function for prediction of eye positions as of the current time using a plurality of pieces of positional data stored in the memory 7. The prediction function for prediction of eye positions as of the future time may be referred to as a second prediction function. The controller 8 may be configured to output predicted eye positions as of the future time based on the second prediction function.

For calculation of the second prediction function, the controller 8 may use a plurality of pieces of positional data that have undergone filtering using a low-pass filter. The controller 8 may be configured to output predicted eye positions using a plurality of pieces of new positional data. The controller 8 may be configured to calculate the second prediction function based on, out of positional data stored in the memory 7, for example, a plurality of pieces of recently stored positional data, and the display-updating time period. The controller 8 may be configured to determine how recently each data has been stored based on one or two or more of the following factors: the time of imaging, the order of data storage, and consecutive numbers. The controller 8 may be configured to calculate the second prediction function on the basis of actually measured eye positions, the time of acquisition at which positional data was acquired by the acquisition section 3, and an experimentally or otherwise estimated updating time period. The second prediction function may be equal to the first prediction function, or may differ from the first prediction function.

(Image display processing)

The controller 8 is configured to start control operation to cause each subpixel P to display an image in correspondence with the visible region 5a based on the most recently outputted predicted eye positions at display time intervals determined so that the display panel 5 carries out image updates at predetermined frequencies. After a lapse of the display-processing time period since the initiation of each display control by the controller 8, predicted eye position-based images are displayed and updated on the display panel 5.

(Evaluation processing)

The controller 8 may evaluate the second prediction function, and modify the second prediction function in accordance with the results of evaluation. The controller 8 may perform a comparison between the output of second prediction function-based predicted eye positions and measured eye positions detected from the actually photographed images corresponding to the predicted eye positions. The controller 8 may bring the predicted eye positions into correspondence with the measured eye positions on the basis of the recorded time of imaging. The controller 8 may bring the predicted eye positions into correspondence with the measured eye positions on the basis of the imaging time interval. The controller 8 may modify the second prediction function in accordance with the results of comparison. The controller 8 may, in the subsequent prediction processing operation, output eye positions predicted by using the modified second prediction function, and cause the display panel 5 to display an image based on the predicted eye positions obtained by using the modified second prediction function.

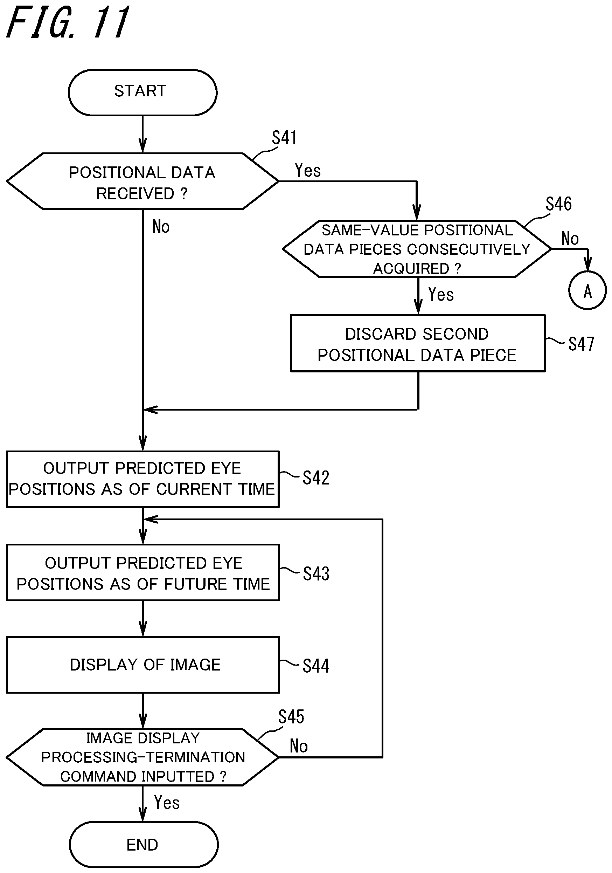

The following describes another example of prediction-function generation processing and image display processing to be performed by the three-dimensional display device 2 with reference to the flow chart of FIG. 11. The controller 8 may execute the procedural steps shown in the flow chart of FIG. 11 at time intervals shorter than the time intervals of imaging by the camera of the detection device 1.

The controller 8 of the three-dimensional display device 2 determines whether positional data has been received by the acquisition section 3 (Step S41).

Upon determining that no positional data has been received in Step S41, the controller 8 calculates the first prediction function using a plurality of pieces of positional data stored in the memory 7, and outputs predicted eye positions as of the current time based on the first prediction function (Step S42).

The controller 8 calculates the second prediction function based on a plurality of pieces of positional data including predicted eye positions as of the current time, and output predicted eye positions as of a future time based on the second prediction function (Step S43).

The controller 8 changes the displayed image in accordance with the predicted eye positions as of the future time at the display time intervals, and causes the display panel 5 to display the updated image (Step S44).

The controller 8 determines whether an image display processing-termination command has been inputted (Step S45).

Upon determining that an image display processing-termination command has been inputted in Step S45, the controller 8 brings the image display processing to an end. Upon determining that no image display processing-termination command has been inputted, the controller 8 returns the procedure to Step S43.

Upon determining that positional data has been received in Step S41, the controller 8 determines whether same-value positional data pieces have been consecutively acquired (Step S46). For the determination in Step S46, the controller 8 performs a comparison between the received positional data and, out of a plurality of pieces of positional data stored in the memory 7, the positional data corresponding to the most recent imaging time.

Upon determining that same-value positional data pieces have been consecutively acquired in Step S46, the controller 8 discards the second of the consecutively acquired positional data pieces (Step S47), and permits the procedure to proceed to Step S42.

Upon determining that same-value positional data pieces have not been consecutively acquired in Step S46, the controller 8 permits the procedure to proceed to Step S22 shown in the flow chart of FIG. 9.

As thus far described, the three-dimensional display device 2 according to this embodiment performs calculation of predicted eye positions as of the current time based on a plurality of pieces of positional data stored in the memory 7 when the acquisition section 3 failed to acquire positional data, and then outputs the predicted eye positions as positional data corresponding to the current time. Thus, even if the detection device 1 failed to detect eye positions, the three-dimensional display device 2 achieves accurate prediction of eye positions as of the current time.

The three-dimensional display device 2 output predicted eye positions as of a future time based on a plurality of pieces of positional data including predicted eye positions as of the current time, and causes each subpixel P of the display panel 5 to display a parallax image based on the predicted eye positions as of the future time. Thus, even if the detection device 1 failed to detect eye positions, the three-dimensional display device 2 achieves accurate prediction of eye positions as of the future time. The three-dimensional display device 2 achieves image display based on predicted eye positions as of a future time, and hence reduces the difficulty of user's viewing of a proper three-dimensional image.

In this embodiment, on the basis of a photographed image that the detection device 1 acquired from the camera and the time of taking the image, the controller 8 predicts eye positions as of a time later than the image-taking time. Hence, the three-dimensional display device 2 may be configured so that the controller 8 and the detection device 1 operate in an asynchronous manner. In other words, the three-dimensional display device 2 may include the controller 8 and the detection device 1 that are built as mutually independent systems. In the three-dimensional display device 2 thus constructed, each of the detection device 1 and the controller 8 can be supplied with a specific clock signal with a frequency suited for assigned processing operation, ensuring that the detection device 1 and the controller 8 operate as intended at high speeds. The controller 8 and the detection device 1 may operate in response to the same clock signal in an asynchronous manner, or may operate in response to different clock signals in an asynchronous manner. The controller 8 and the detection device 1 may be designed so that one of them operates in synchronization with a first clock signal and the other operates in synchronization with a second clock signal obtained by division of the first clock signal.

Although there has been shown and described herein a certain embodiment as a representative example, it is apparent to those skilled in the art that many changes and rearrangement of parts are possible. That is, the described embodiment is not to be construed as limiting of the invention, and hence various changes and modifications may be made. The scope of protection is defined the appended claims. For example, a plurality of constituent blocks as shown in the description of the embodiment or practical examples may be combined into one, or a single constituent block may be divided into pieces.

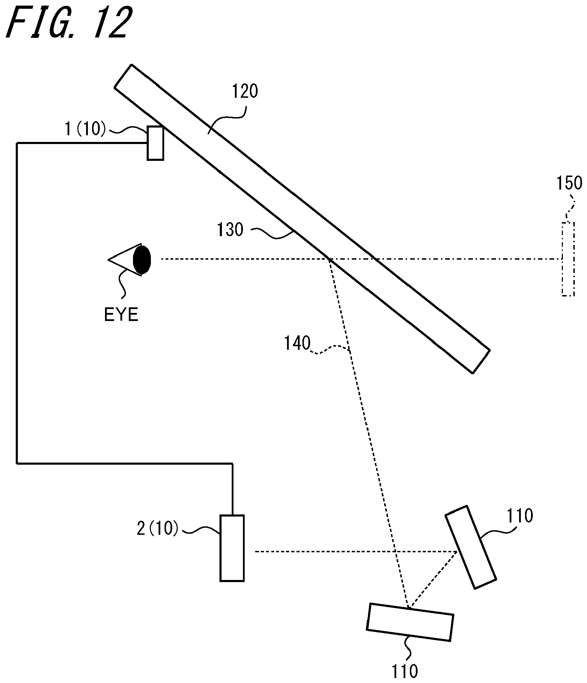

As shown in FIG. 12, the three-dimensional display system 10 may be installed in a head-up display 100. The head-up display 100 is also referred to as "HUD (Head-up Display) 100". The HUD 100 includes the three-dimensional display system 10, an optical member 110, and a projected member 120 having a projected surface 130. The HUD 100 enables image light emitted from the three-dimensional display device 2 to reach the projected member 120 through the optical member 110. The HUD 100 enables the image light reflected from the projected member 120 to reach user's left and right eyes. That is, the HUD 100 enables the image light from the three-dimensional display device 2 to travel along an optical path 140 indicated by dashed lines so as to reach user's left and right eyes. The user is thus able to view a virtual image 150 resulting from the image light which has arrived at his or her eyes through the optical path 140. The HUD 100 may provide stereoscopic vision adapted to user's movements by exercising display control in accordance with the positions of user's left and right eyes.

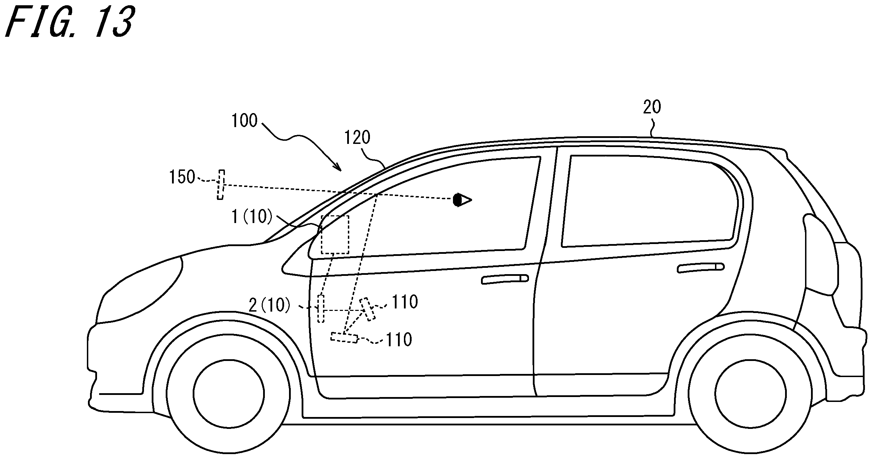

As shown in FIG. 13, the image display device 1 and the HUD 100 may be installed in a mobile object 20. Some constituent components of the HUD 100 may be prepared by the shared use of some devices or components of the mobile object 20. For example, in the mobile object 20, its windshield may serve also as the projected member 120. The devices or components of the mobile object 20 for shared use as some constituent components of the HUD 100 may be called "HUD modules".

The display panel 5 is not limited to a transmissive display panel and may thus be of a display panel of other type such as a self-luminous display panel. Examples of the transmissive display panel include, in addition to liquid-crystal panels, MEMS (Micro Electro Mechanical Systems) shutter-based display panels. Examples of the self-luminous display panel include organic EL (electro-luminescence) display panels and inorganic EL display panels. The use of a self-luminous display panel for the display panel 5 eliminates the need to use the irradiator 4. In the case where a self-luminous display panel is used for the display panel 5, the parallax barrier 6 is located toward an image light-emitting side of the display panel 5.

The term "mobile object" as used in the present disclosure includes vehicles, ships, and aircraft. The term "vehicle" as used in the present disclosure includes, but is not limited to, motor vehicles and industrial vehicles, and may also include railroad vehicles, domestic vehicles, and fixed-wing airplanes that run on runways. The term "motor vehicle" includes, but is not limited to, passenger automobiles, trucks, buses, motorcycles, and trolleybuses, and may also include other types of vehicles that run on roads. The term "industrial vehicle" includes industrial vehicles for agriculture and industrial vehicles for construction work. The term "industrial vehicle" includes, but is not limited to, forklifts and golf carts. The term "industrial vehicle for agriculture" includes, but is not limited to, tractors, cultivators, transplanters, binders, combines, and lawn mowers. The term "industrial vehicle for construction work" includes, but is not limited to, bulldozers, scrapers, loading shovels, crane vehicles, dump trucks, and road rollers. The term "vehicle" also includes human-powered vehicles. Categorization criteria for vehicles are not limited to the foregoing. For example, the term "motor vehicle" may include industrial vehicles that can run on roads, and, one and the same vehicle may be put in a plurality of categories. The term "ship" as used in the present disclosure includes personal watercraft, boats, and tankers. The term "aircraft" as used in the present disclosure includes fixed-wing airplanes and rotary-wing airplanes.

While, for example, Coordinated Universal Time (UTC) may be used as the basis for "clock time" in the present disclosure, the time standard is not so limited, and use can be made of device's own time standards based on internal clock, for example. The unique time standard is not limited to a specific clock time for synchronization between a plurality of system parts, but may include discrete clock times set specifically for individual parts, and may also include a clock time common to some parts.

Reference Signs List

1: Detection device
2: Three-dimensional display device
3: Acquisition section
4: Irradiator
5: Display panel
6: Parallax barrier
7: Memory
8: Controller
10: Three-dimensional display system
20: Mobile object
51a: Visible region
51aL: Left visible region
51aR: Right visible region
51bL: Left dimming region
51bL: Right dimming region
61: Dimming portion
62: Light-transmitting portion
100: Head-up display

110: Optical member
120: Projected member
130: Projected surface
140: Optical path
150: Virtual image
A: Active area

**Claims**

1. A three-dimensional display device (2), comprising:

   a display panel (5) configured to display a parallax image and emit image light corresponding to the parallax image;
   a parallax barrier (6) comprising a surface configured to define a direction of the image light;
   an acquisition section (3) configured to successively acquire a plurality of pieces of positional data indicating positions of eyes of a user from a detection device (1) which is configured to detect positions of the eyes based on photographed images which are successively acquired from a camera which is configured to image the eyes of the user at imaging time intervals;
   a memory (7) configured to store the plurality of pieces of positional data which are successively acquired by the acquisition section (3); and
   a controller (8) configured to output predicted eye positions of the eyes as of a time later than a current time based on the plurality of pieces of positional data stored in the memory (7), and cause each of subpixels (P) of the display panel (5) to display the parallax image based on the predicted eye positions,
   **characterized in that**, in
   a case where the acquisition section (3) consecutively acquired a piece of positional data of a same value again, the controller is configured:

   to discard a second piece of positional data, which is consecutively acquired again, and output, as positional data, predicted eye positions of the eyes as of the current time, based on the plurality of pieces of positional data stored in the memory (7),
   to output predicted eye positions of the eyes as of the time later than the current time, based on a plurality of pieces of positional data comprising the predicted eye positions as of the current time, and
   to cause each of the subpixels (P) of the display panel (5) to display the parallax image, based on the predicted eye positions as of the time later than the current time.

2. The three-dimensional display device (2) according to claim 1,
   wherein the controller (8) is configured to calculate a prediction function that indicates a relationship of the time later than the current time with eye positions as of the time, based on the positional data stored in the memory (7), and output predicted eye positions of the eyes based on the prediction function.

3. The three-dimensional display device (2) according to claim 2,
   wherein the controller (8) is configured to output predicted eye positions of the eyes based on the prediction function at output time intervals shorter than the imaging time intervals, and cause each of the subpixels (P) of the display panel (5) to display the parallax image based on the predicted eye positions.

4. The three-dimensional display device (2) according to claim 2 or 3,
   wherein the controller (8) is configured to output the predicted eye positions based on the prediction function at output time intervals shorter than display time intervals at which images to be displayed on the display panel (5) are updated.

5. The three-dimensional display device (2) according to any one of claims 1 to 4,
   wherein, in a case where the acquisition section (3) failed to acquire positional data, the controller is configured:

   to output, as positional data, predicted eye positions of the eyes as of the current time, based on the plurality of pieces of positional data stored in the memory (7),
   to output predicted eye positions of the eyes as of the time later than the current time, based on a plurality of pieces of positional data comprising the predicted eye positions as of the current time, and

to cause each of the subpixels (P) of the display panel (5) to display the parallax image based on the predicted eye positions as of the time later than the current time.

6. The three-dimensional display device (2) according to any one of claims 1 to 5, wherein the controller (8) and the detection device (1) operate in an asynchronous manner.

7. A three-dimensional display system (10), comprising:

a three-dimensional display device (2) according to any one of claims 1 to 6; and the detection device (1), the detection device (1) detecting positions of eyes of the user based on photographed images which are successively acquired from the camera which images the eyes of the user at imaging time intervals.

8. A head-up display (100), comprising:

a three-dimensional display system (10) according to claim 7; and a projected member (120), the projected member (120) reflecting the image light emitted from the three-dimensional display device (2), in a direction toward the eyes of the user.

9. A mobile object (20), comprising: a head-up display (100) according to claim 8.

**Patentansprüche**

1. Dreidimensionale Anzeigevorrichtung (2), die Folgendes umfasst:

ein Anzeigefeld (5), das zum Anzeigen eines Parallaxenbildes und Emittieren von Bildlicht, das dem Parallaxenbild entspricht, konfiguriert ist;
eine Parallaxenbarriere (6), die eine Oberfläche umfasst, die zum Definieren einer Richtung des Bildlichts konfiguriert ist;
einen Erfassungsabschnitt (3), der zum sukzessiven Erfassen mehrerer Positionsdatenelemente, die Positionen von Augen eines Benutzers angeben, von einer Detektionsvorrichtung (1) konfiguriert ist, die zum Detektieren von Positionen der Augen basierend auf fotografierten Bildern konfiguriert ist, die sukzessive von einer Kamera erfasst werden, die zum bildlichen Erfassen der Augen des Benutzers zu Bildgebungszeitintervallen konfiguriert ist;
einen Speicher (7), der zum Speichern der mehreren Positionsdatenelemente konfiguriert ist, die sukzessive durch den Erfassungsabschnitt (3) erfasst werden; und
eine Steuerung (8), die zum Ausgeben vorhergesagter Augenpositionen der Augen zu einer Zeit später als eine aktuelle Zeit basierend auf den mehreren Positionsdatenelementen, die in dem Speicher (7) gespeichert sind, und Bewirken davon konfiguriert ist, dass jedes von Subpixeln (P) des Anzeigefeldes (5) das Parallaxenbild basierend auf den vorhergesagten Augenpositionen anzeigt,
**dadurch gekennzeichnet, dass** in einem Fall, in dem der Erfassungsabschnitt (3) wieder ein Positionsdatenelement mit einem gleichen Wert konsekutiv erfasst hat, die Steuerung zu Folgendem konfiguriert ist:

zum Verwerfen eines zweiten Positionsdatenelements, das wieder konsekutiv erfasst wird, und Ausgeben, als Positionsdaten, vorhergesagter Augenpositionen der Augen zur aktuellen Zeit basierend auf den mehreren Positionsdatenelementen, die in dem Speicher (7) gespeichert sind,
zum Ausgeben vorhergesagter Augenpositionen der Augen zur Zeit später als der aktuellen Zeit basierend auf mehreren Positionsdatenelementen, die die vorhergesagten Augenpositionen zur aktuellen Zeit umfassen, und
zum Bewirken, dass jedes der Subpixel (P) des Anzeigefeldes (5) das Parallaxenbild basierend auf den vorhergesagten Augenpositionen zur Zeit später als der aktuellen Zeit anzeigt.

2. Dreidimensionale Anzeigevorrichtung (2) nach Anspruch 1, wobei die Steuerung (8) zum Berechnen einer Vorhersagefunktion, die eine Beziehung der Zeit später als die aktuelle Zeit mit Augenpositionen zu der Zeit angibt, basierend auf den Positionsdaten, die in dem Speicher (7) gespeichert sind, und Ausgeben vorhergesagter Augenpositionen der Augen basierend auf der Vorhersagefunktion konfiguriert ist.

3. Dreidimensionale Anzeigevorrichtung (2) nach Anspruch 2,
wobei die Steuerung (8) zum Ausgeben vorhergesagter Augenpositionen der Augen basierend auf der Vorhersagefunktion zu Ausgabezeitintervallen kürzer als die Bildgebungszeitintervalle und Bewirken davon konfiguriert ist, dass jedes der Subpixel (P) des Anzeigefeldes (5) das Parallaxenbild basierend auf den vorhergesagten Augenpositionen anzeigt.

4. Dreidimensionale Anzeigevorrichtung (2) nach Anspruch 2 oder 3,
wobei die Steuerung (8) zum Ausgeben der vorhergesagten Augenpositionen basierend auf der Vorhersagefunktion zu Ausgabezeitintervallen kürzer als Anzeigezeitintervalle, zu denen auf dem Anzeigefeld (5) anzuzeigende Bilder aktualisiert werden, konfiguriert ist.

5. Dreidimensionale Anzeigevorrichtung (2) nach einem der Ansprüche 1 bis 4,
wobei in einem Fall, in dem der Erfassungsabschnitt (3) beim Erfassen von Positionsdaten fehlgeschlagen ist, die Steuerung zu Folgendem konfiguriert ist:

zum Ausgeben, als Positionsdaten, vorhergesagter Augenpositionen der Augen zur aktuellen Zeit basierend auf den mehreren Positionsdatenelementen, die in dem Speicher (7) gespeichert sind,
zum Ausgeben vorhergesagter Augenpositionen der Augen zur Zeit später als die aktuelle Zeit basierend auf mehreren Positionsdatenelementen, die die vorhergesagten Augenpositionen zur aktuellen Zeit umfassen, und
zum Bewirken, dass jedes der Subpixel (P) des Anzeigefeldes (5) das Parallaxenbild basierend auf den vorhergesagten Augenpositionen zur Zeit später als die aktuelle Zeit anzeigt.

6. Dreidimensionale Anzeigevorrichtung (2) nach einem der Ansprüche 1 bis 5,
wobei die Steuerung (8) und die Detektionsvorrichtung (1) auf eine asynchrone Weise arbeiten.

7. Dreidimensionales Anzeigesystem (10), das Folgendes umfasst:

eine dreidimensionale Anzeigevorrichtung (2) nach einem der Ansprüche 1 bis 6; und
die Detektionsvorrichtung (1),
wobei die Detektionsvorrichtung (1) Positionen von Augen des Benutzers basierend auf fotografierten Bildern detektiert, die sukzessive von der Kamera erfasst werden, die die Augen des Benutzers zu Bildgebungszeitintervallen bildlich erfasst.

8. Head-Up-Anzeige (100), die Folgendes umfasst:

ein dreidimensionales Anzeigesystem (10) nach Anspruch 7; und
ein hervorstehendes Element (120),
wobei das hervorstehende Element (120) das Bildlicht, das von der dreidimensionalen Anzeigevorrichtung (2) emittiert wird, in einer Richtung zu den Augen des Benutzers hin reflektiert.

9. Mobiles Objekt (20), das Folgendes umfasst:
eine Head-Up-Anzeige (100) nach Anspruch 8.

**Revendications**

1. Dispositif d'affichage tridimensionnel (2) comprenant :

un panneau d'affichage (5) configuré pour afficher une image de parallaxe et émettre une lumière d'image correspondant à l'image de parallaxe ;
une barrière de parallaxe (6) comprenant une surface configurée pour définir une direction de la lumière d'image ;
une section d'acquisition (3) configurée pour acquérir de manière successive une pluralité d'éléments de données de position indiquant les positions des yeux d'un utilisateur à partir d'un dispositif de détection (1) qui est configuré pour détecter les positions des yeux sur la base d'images photographiées qui sont acquises de manière successive par une caméra qui est configurée pour photographier les yeux de l'utilisateur à des intervalles de temps d'imagerie ;

une mémoire (7) configurée pour stocker la pluralité d'éléments de données de position qui sont successivement acquis par la section d'acquisition (3) ; et

un contrôleur (8) configuré pour délivrer en sortie des positions prédites des yeux à un moment ultérieur à un moment actuel sur la base de la pluralité d'éléments de données de position stockés dans la mémoire (7), et faire en sorte que chacun des sous-pixels (P) du panneau d'affichage (5) affiche l'image de parallaxe sur la base des positions prédites des yeux,

**caractérisé en ce que**, dans un cas où la section d'acquisition (3) a à nouveau acquis, de manière consécutive, un élément de données de position d'une même valeur, le contrôleur est configuré :

pour écarter un deuxième élément de données de position, qui est à nouveau acquis de manière consécutive, et délivrer en sortie, en tant que données de position, des positions prédites des yeux à partir du moment actuel, sur la base de la pluralité d'éléments de données de position stockés dans la mémoire (7),

pour délivrer en sortie des positions prédites des yeux à un moment ultérieur au moment actuel, sur la base d'une pluralité d'éléments de données de position comprenant les positions prédites des yeux à partir du moment actuel, et

pour amener chacun des sous-pixels (P) du panneau d'affichage (5) à afficher l'image de parallaxe, sur la base des positions prédites des yeux à un moment ultérieur au moment actuel.

2. Dispositif d'affichage tridimensionnel (2) selon la revendication 1,
dans lequel le contrôleur (8) est configuré pour calculer une fonction de prédiction qui indique une relation entre le moment ultérieur au moment actuel et les positions des yeux au moment actuel, sur la base des données de position stockées dans la mémoire (7), et pour délivrer en sortie les positions prédites des yeux sur la base de la fonction de prédiction.

3. Dispositif d'affichage tridimensionnel (2) selon la revendication 2,
dans lequel le contrôleur (8) est configuré pour délivrer en sortie les positions prédites des yeux sur la base de la fonction de prédiction à des intervalles de temps de sortie plus courts que les intervalles de temps d'imagerie, et faire en sorte que chacun des sous-pixels (P) du panneau d'affichage (5) affiche l'image de parallaxe sur la base des positions prédites des yeux.

4. Dispositif d'affichage tridimensionnel (2) selon la revendication 2 ou la revendication 3,
dans lequel le contrôleur (8) est configuré pour délivrer en sortie les positions prédites des yeux sur la base de la fonction de prédiction à des intervalles de temps de sortie plus courts que les intervalles de temps d'affichage auxquels les images à afficher sur le panneau d'affichage (5) sont mises à jour.

5. Dispositif d'affichage tridimensionnel (2) selon l'une quelconque des revendications 1 à 4,
dans lequel, dans un cas où la section d'acquisition (3) n'a pas réussi à acquérir des données de position, le contrôleur est configuré :

pour délivrer en sortie, en tant que données de position, les positions prédites des yeux à partir du moment actuel, sur la base de la pluralité d'éléments de données de position stockés dans la mémoire (7),

pour délivrer en sortie les positions prédites des yeux à partir d'un moment ultérieur au moment actuel, sur la base d'une pluralité d'éléments de données de position comprenant les positions prédites des yeux à partir du moment actuel, et

pour amener chacun des sous-pixels (P) du panneau d'affichage (5) à afficher l'image de parallaxe sur la base des positions prédites des yeux à partir du moment ultérieur au moment actuel.

6. Dispositif d'affichage tridimensionnel (2) selon l'une quelconque des revendications 1 à 5,
dans lequel le contrôleur (8) et le dispositif de détection (1) fonctionnent de manière asynchrone.

7. Système d'affichage tridimensionnel (10) comprenant :

un dispositif d'affichage tridimensionnel (2) selon l'une quelconque des revendications 1 à 6 ; et
le dispositif de détection (1),
le dispositif de détection (1) détectant les positions des yeux de l'utilisateur sur la base d'images photographiées qui sont acquises de manière successive par la caméra qui photographie les yeux de l'utilisateur à des intervalles de temps d'imagerie.

**8.** Affichage tête haute (100) comprenant :

un système d'affichage tridimensionnel (10) selon la revendication 7 ; et
un élément projeté (120),
l'élément projeté (120) réfléchissant la lumière d'image émise par le dispositif d'affichage tridimensionnel (2),
dans une direction vers les yeux de l'utilisateur.

**9.** Objet mobile (20) comprenant :
un affichage tête haute (100) selon la revendication 8.

FIG. 1

EP 3 840 373 B1

EP 3 840 373 B1

# FIG. 2

FIG. 3

# FIG. 4

EP 3 840 373 B1

z ⊗ → x
y

5

| P1 | P2 | P3 | P4 | P5 | P6 | P7 | P8 | P1 | P2 | P3 | P4 | P5 | P6 | P7 | P8 | P1 | P2 | P3 | P4 | P5 | P6 | P7 | P8 | P1 | P2 | P3 | P4 | P5 | P6 |
| L | L | L | L | R | R | R | R | L | L | L | L | R | R | R | R | L | L | L | L | R | R | R | R | L | L | L | L | R | R |
| P8 | P1 | P2 | P3 | P4 | P5 | P6 | P7 | P8 | P1 | P2 | P3 | P4 | P5 | P6 | P7 | P8 | P1 | P2 | P3 | P4 | P5 | P6 | P7 | P8 | P1 | P2 | P3 | P4 | P5 |
| R | L | L | L | L | R | R | R | R | L | L | L | L | R | R | R | R | L | L | L | L | R | R | R | R | L | L | L | L | R |
| P7 | P8 | P1 | P2 | P3 | P4 | P5 | P6 | P7 | P8 | P1 | P2 | P3 | P4 | P5 | P6 | P7 | P8 | P1 | P2 | P3 | P4 | P5 | P6 | P7 | P8 | P1 | P2 | P3 | P4 |
| R | R | L | L | L | L | R | R | R | R | L | L | L | L | R | R | R | R | L | L | L | L | R | R | R | R | L | L | L | L |
| P6 | P7 | P8 | P1 | P2 | P3 | P4 | P5 | P6 | P7 | P8 | P1 | P2 | P3 | P4 | P5 | P6 | P7 | P8 | P1 | P2 | P3 | P4 | P5 | P6 | P7 | P8 | P1 | P2 | P3 |
| R | R | R | L | L | L | L | R | R | R | R | L | L | L | L | R | R | R | R | L | L | L | L | R | R | R | R | L | L | L |
| P5 | P6 | P7 | P8 | P1 | P2 | P3 | P4 | P5 | P6 | P7 | P8 | P1 | P2 | P3 | P4 | P5 | P6 | P7 | P8 | P1 | P2 | P3 | P4 | P5 | P6 | P7 | P8 | P1 | P2 |
| R | R | R | R | L | L | L | L | R | R | R | R | L | L | L | L | R | R | R | R | L | L | L | L | R | R | R | R | L | L |
| P4 | P5 | P6 | P7 | P8 | P1 | P2 | P3 | P4 | P5 | P6 | P7 | P8 | P1 | P2 | P3 | P4 | P5 | P6 | P7 | P8 | P1 | P2 | P3 | P4 | P5 | P6 | P7 | P8 | P1 |
| L | R | R | R | R | L | L | L | L | R | R | R | R | L | L | L | L | R | R | R | R | L | L | L | L | R | R | R | R | L |

5aL · 5bL · 5aL · 5bL · 5aL · 5bL · 5aL · 5bL · 5aL

FIG. 5

EP 3 840 373 B1

FIG. 6

FIG. 7

*FIG. 8*

```
            ┌─────────────┐
            │    START    │
            └─────────────┘
                   │
                   ▼ ◄─────────────────────────────┐
   ┌──────────────────────────────────────┐         │
   │  ACQUISITION OF PHOTOGRAPHED IMAGE    │──S11    │
   └──────────────────────────────────────┘         │
                   │                                 │
                   ▼                                 │
   ┌──────────────────────────────────────┐         │
   │      DETECTION OF EYE POSITIONS       │──S12    │
   └──────────────────────────────────────┘         │
                   │                                 │
                   ▼                                 │
   ┌──────────────────────────────────────┐         │
   │    TRANSMISSION OF POSITIONAL DATA    │──S13    │
   └──────────────────────────────────────┘         │
                   │                          S14    │
                   ▼                                 │
   ╱────────────────────────────────────────╲  No   │
  ⟨   TASK-TERMINATION COMMAND INPUTTED ?     ⟩──────┘
   ╲────────────────────────────────────────╱
                   │ Yes
                   ▼
            ┌─────────────┐
            │     END     │
            └─────────────┘
```

*FIG. 9*

START

S21
POSITIONAL DATA RECEIVED ? — No

Yes

Ⓐ

STORING OF POSITIONAL DATA — S22

FILTERING — S23

GENERATION OF PREDICTION FUNCTION — S24

S25
POSITIONAL DATA RECEIVED ? — No

Yes

STORING OF POSITIONAL DATA — S26

FILTERING — S27

MODIFICATION OF PREDICTION FUNCTION — S28

S29
PREDICTION-FUNCTION GENERATION PROCESSING-TERMINATION COMMAND INPUTTED ? — No

Yes

END

## FIG. 10

```
                    START

    OUTPUTTING OF PREDICTED POSITIONS
    BASED ON PREDICTION FUNCTION          S31

         DISPLAY OF IMAGE                 S32

                                          S33
    IMAGE DISPLAY PROCESSING-TERMINATION      No
    COMMAND INPUTTED ?

                 Yes

                    END
```

## FIG. 11

START

S41

POSITIONAL DATA
RECEIVED ? — Yes

No

S46

SAME-VALUE POSITIONAL
DATA PIECES CONSECUTIVELY
ACQUIRED ? — No → (A)

Yes

DISCARD SECOND
POSITIONAL DATA PIECE — S47

OUTPUT PREDICTED EYE
POSITIONS AS OF CURRENT TIME — S42

OUTPUT PREDICTED EYE
POSITIONS AS OF FUTURE TIME — S43

DISPLAY OF IMAGE — S44

S45

IMAGE DISPLAY
PROCESSING-TERMINATION
COMMAND INPUTTED ? — No

Yes

END

FIG. 12

FIG. 13

EP 3 840 373 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2418862 A2
- WO 2018105533 A1
- EP 3037922 A1
- JP 2001166259 A